# FASCICULE DE BREVET EUROPEEN

(11) **EP 1 938 468 B1**
(45) Date de publication et mention de la délivrance du brevet: **11.05.2011**
(21) Numéro de dépôt: 06809056.2
(22) Date de dépôt: 18.10.2006
(51) Int. Cl.: H04B 3/54

(54) **PROCEDE DE COMMANDE FILAIRE D'UN EQUIPEMENT DOMOTIQUE MUNI D'UN MOTEUR ELECTRIQUE**
VERFAHREN ZUM STEUERN EINES KABELGESTEUERTEN HAUSAUTOMATISIERUNGSGERÄTS, DAS MIT EINEM ELEKTROMOTOR AUSGESTATTET IST
METHOD FOR CONTROLLING A CABLE-CONTROLLED HOME AUTOMATION APPLIANCE PROVIDED WITH AN ELECTRIC MOTOR

(30) Priorité: 19.10.2005 FR 0510644
(43) Date de publication de la demande: 02.07.2008
(73) Titulaire: Somfy SAS, 74300 Cluses (FR)
(72) Inventeur: CHERON, Eric, F-74460 Taninges (FR); TRANCHAND, Alain, F-74330 La Balme de Sillingy (FR)
(74) Mandataire: Bugnion Genève
(86) Numéro de dépôt international: PCT/IB2006/002912
(87) Numéro de publication internationale: WO 2007/045969

(56) Documents cités:
- EP-A- 1 160 415
- FR-A- 2 844 625

## Description

L'invention concerne un procédé de commande défini selon le préambule de la revendication 1. Elle concerne également une interface de commande à distance et une installation domotique pour la mise en oeuvre du procédé de commande.

L'invention concerne notamment la commande d'actionneurs d'éléments mobiles, tels que des portes, des volets, des stores ou des écrans.

De tels actionneurs permettent le déplacement d'un élément mobile entre des positions de fin de course. L'actionneur est relié en entrée à au moins deux conducteurs de phase pouvant être reliés, par l'intermédiaire d'un boîtier de commande, à la phase d'une ligne d'alimentation en énergie électrique. Ces deux conducteurs sont chacun associé à un sens de rotation. Dans ces actionneurs, lorsque le signal de phase est appliqué au premier conducteur de phase, l'élément mobile est entraîné dans un premier sens et lorsque le signal de phase est appliqué au deuxième conducteur, l'élément mobile est entraîné dans un deuxième sens. L'actionneur dispose également en entrée d'un troisième conducteur relié au neutre de la ligne d'alimentation.

Les déplacements de l'élément mobile sont commandés depuis un boîtier de commande comprenant des boutons de commande, sur lesquels agit l'utilisateur. Une action sur un bouton de commande déplace un contact de manière à connecter la phase d'alimentation avec un des deux conducteurs de l'actionneur, ce qui permet d'alimenter l'actionneur et de le piloter dans le sens de rotation correspondant. De manière générale, le conducteur de neutre est directement raccordé à l'actionneur, tandis que le conducteur de phase du réseau électrique et les conducteurs de phase de l'actionneur sont raccordés au boîtier de commande.

Une unité électronique de pilotage est capable de détecter, sur chacun des conducteurs, la présence d'un signal de tension et d'utiliser ce signal pour alimenter et piloter le moteur dans un sens ou dans l'autre.

L'unité électronique de pilotage permet également de détecter et mémoriser la position courante de l'élément mobile, de gérer l'arrivée dans des positions particulières prédéfinies et notamment les positions de fin de course. Dans ces positions, l'unité électronique de pilotage coupe l'alimentation de l'actionneur de manière à arrêter le mouvement de l'élément mobile.

Ainsi, deux conducteurs pouvant être reliés à la phase de l'alimentation en énergie électrique suffisent pour permettre l'ouverture et la fermeture de l'élément mobile, à partir d'un point de commande à un ou plusieurs boutons de commande. Les boutons de commande peuvent dans ce cas avoir les fonctions suivantes : Montée, Stop, Descente.

Cette configuration n'apparaît pas suffisante pour permettre un certain nombre de fonctions plus évoluées, comme par exemple la gestion de commandes de déplacement de l'élément mobile pour l'amener dans une ou plusieurs positions intermédiaires.

En effet, dans le cas d'un volet roulant par exemple, il est intéressant de pouvoir commander directement le déplacement du volet jusqu'à une position préférée, comme par exemple une position ajourée ou une position à mi-hauteur.

De même, dans le cas d'un store vénitien, il est souhaitable de pouvoir commander le déplacement des lames dans une orientation particulière.

Une autre solution consiste à câbler le moteur de l'actionneur avec un troisième conducteur de phase, dit de position intermédiaire prédéterminée. Dans ce cas, le boîtier de commande comprend trois boutons de commande permettant à l'utilisateur de choisir entre un déplacement d'ouverture, un déplacement de fermeture, ou un déplacement de mise en position intermédiaire prédéterminée. Cette solution n'est pas satisfaisante du fait de la nécessité d'un conducteur supplémentaire.

On connaît de la demande de brevet FR 2 815 449, un boîtier de commande perfectionné, pour lequel il est possible, outre la commande par les boutons de commande de type Montée-Descente, de raccorder un automatisme externe. Les conducteurs additionnels se raccordent en amont d'un circuit codeur (gérant les ordres à émettre en fonction des ordres reçus en entrée), sur deux entrées utilisées pour les commandes de Montée-Descente. Pour éviter les interférences entre les signaux issus de l'automatisme externe et ceux issus des boutons de commande, des diodes sont installées sur chaque connecteur en amont du point de liaison commun. Cette configuration, qui utilise un boîtier de commande évolué, ne permet pas de gérer de nouvelles fonctions de l'actionneur lui-même.

On connaît également de la demande de brevet FR 2 808 834, un dispositif de commande d'un actionneur d'élément mobile, pouvant être raccordé à l'actionneur par voie filaire ou pouvant communiquer avec celui-ci par voie non filaire. Ce document décrit une méthode permettant de faciliter la programmation de l'actionneur. En particulier, l'entrée dans le mode de programmation est réalisée lorsqu'une des entrées du circuit de commande de l'actionneur est reliée par un shunt avec un autre conducteur. Par shunt, le demandeur entend une liaison directe sous forme d'un court-circuit, une liaison résistive, une liaison capacitive ou une liaison unidirectionnelle à diode. Un tel boîtier de commande permet ainsi de gérer une pluralité de modes de fonctionnement de l'actionneur, notamment en utilisant des tests sur la durée des contacts provoqués par l'utilisateur. En revanche, dans un mode de commande proprement dit, ce document ne donne pas d'indication sur d'éventuels ajouts de fonctionnalités.

On connaît par ailleurs du brevet US 4,719,446 un dispositif de commande combinée d'un ventilateur et d'une lampe, dans lequel des fonctions supplémentaires de commande (différentes vitesses, intensités) peuvent être commandées en ne transmettant qu'une partie seulement de la sinusoïde d'alimentation par l'intermédiaire d'un conducteur de phase. Cette commande, appliquée au domaine de l'invention, implique un dispositif d'actionnement plus coûteux puisqu'il est nécessaire d'alimenter l'électronique et surtout le moteur avec une tension relativement différente de la tension nominale. De même, la détection des différentes combinaisons possibles de signaux de tension nécessite une électronique performante.

On connaît aussi du document FR 2 844 625 un procédé de commande de l'activation d'un actionneur électromécanique.

Le but de l'invention est de fournir un procédé de commande remédiant aux inconvénients précités et améliorant les procédés de commande connus de l'art antérieur. En particulier, l'invention se propose d'étendre les fonctionnalités de commande de base, qui sont pour un actionneur électronique filaire à trois conducteurs : rotation dans un premier sens, rotation dans un deuxième sens et arrêt, à des fonctionnalités de commande particulières sans qu'il ne soit nécessaire de modifier le câblage de l'actionneur. L'invention propose de plus une interface de commande permettant de commander des fonctionnalités de mouvement supplémentaires dans un mode de commande.

Le procédé de commande selon l'invention est caractérisé en ce qu'un ordre de commande de mouvement particulier est déterminé par la présence d'un signal de tension particulier sur l'un au moins des conducteurs de phase et en ce que cet ordre de commande particulier n'est exécuté par l'unité de pilotage que si la tension alternative d'alimentation est disponible dans celle-ci à partir des tensions présentes sur les conducteurs de phase.

On entend, par signal de tension particulier, un signal de tension présentant une caractéristique tronquée par rapport à la tension sinusoïdale d'alimentation, et présentant au moins une caractéristique électrique le différenciant par rapport à la tension alternative d'alimentation de l'équipement domotique. On choisit de préférence un signal de tension facile à produire et facile à identifier par l'unité de pilotage. Un signal de tension nulle n'est pas un signal de tension particulier au sens de la présente description.

Différents modes d'exécution du procédé de commande sont définis par les revendications dépendantes 2 à 7.

Une interface de commande à distance selon l'invention est définie par les revendications 8 ou 9.

Une installation domotique selon l'invention est définie par la revendication 10.

Le dessin annexé représente, à titre d'exemple, différents modes de réalisation d'une installation pour la mise en oeuvre du procédé de commande selon l'invention.
La figure 1 est un schéma électrique d'un premier mode de réalisation d'une installation selon l'invention.
La figure 2 est un schéma électrique d'un deuxième mode de réalisation d'une installation selon l'invention.
La figure 3 est un schéma électrique d'un troisième mode de réalisation d'une installation selon l'invention.
La figure 4 est un schéma électrique d'un quatrième mode de réalisation d'une installation selon l'invention.
La figure 5 est un schéma électrique d'un cinquième mode de réalisation d'une installation selon l'invention.
La figure 6 est un ordinogramme d'un mode d'exécution du procédé de commande d'équipement domotique selon l'invention.
La figure 7 est un schéma électrique détaillé d'une unité de pilotage et d'un équipement pour la mise en oeuvre du procédé de commande selon l'invention.

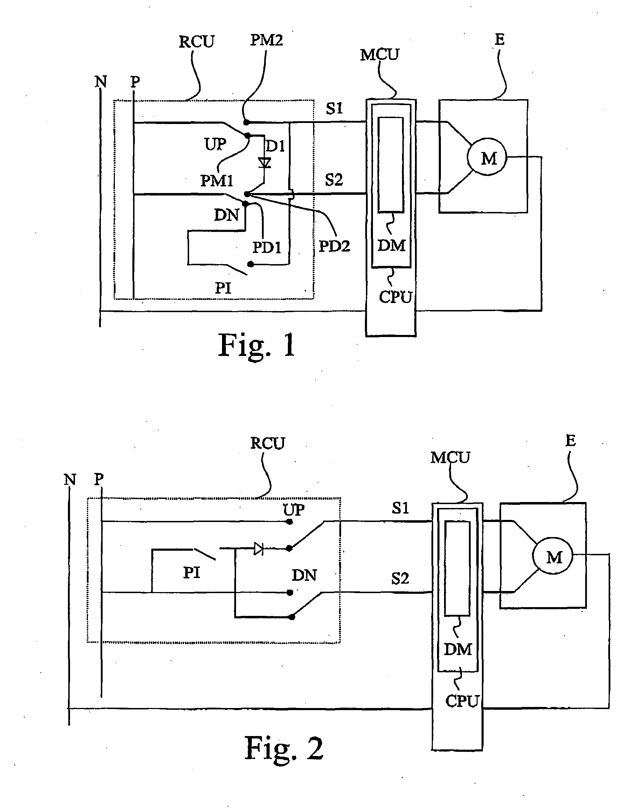

L'installation représentée à la figure 1 comprend un équipement domotique E connecté à une unité de pilotage MCU, elle-même reliée à une interface de commande à distance RCU. Une source de tension alternative alimente l'équipement domotique via l'interface de commande à distance RCU et l'unité de pilotage MCU.

L'équipement est un actionneur d'un élément mobile LD, tel qu'une porte, un volet, un store ou un écran. L'équipement comprend un moteur M.

L'installation dispose de deux conducteurs de phase S1 et S2 entre l'interface de commande à distance RCU et l'unité de pilotage MCU.

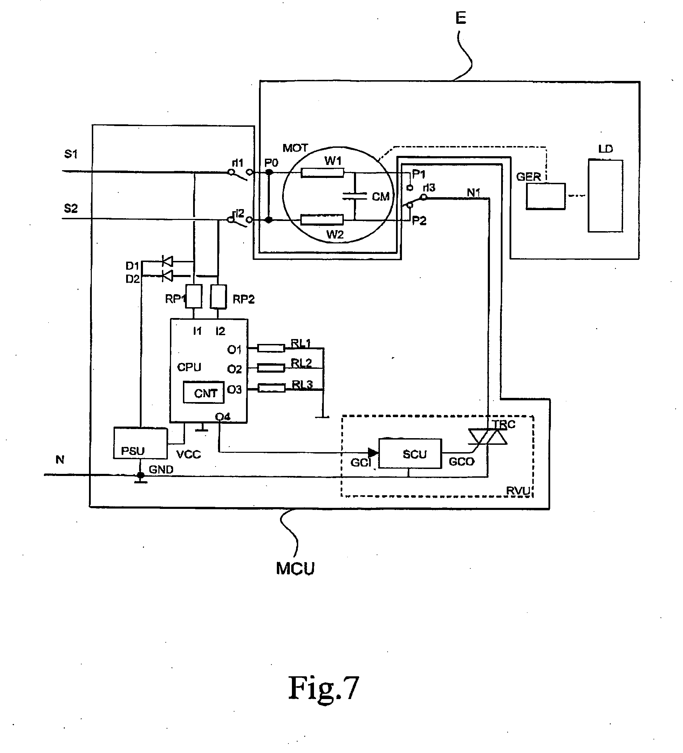

L'unité de pilotage, représentée en détail à la figure 7, est prévue pour gérer les commandes du moteur, notamment la mise en marche du moteur, son arrêt et le comptage des positions. L'unité de pilotage MCU est reliée aux deux conducteurs de phase S1 et S2 et est capable de déterminer le signal disponible sur chaque conducteur et d'en déduire les actions à mettre en oeuvre pour gérer les commandes du moteur. L'unité de pilotage MCU active des relais qui permettent d'alimenter les bobinages du moteur pour le mettre en mouvement dans un sens ou dans l'autre.

L'élément mobile LD est entraîné par le moteur M de type à induction par l'intermédiaire d'un réducteur GER. Le moteur M comprend un premier enroulement W1, un deuxième enroulement W2 et un condensateur permanent CM. Le point commun aux deux enroulements P0 est relié à un premier contact de relais rl1 et à un deuxième contact de relais rl2. Lorsque le premier contact de relais est activé, le point commun P0 aux deux enroulements est relié au conducteur de phase S1 et, lorsque le deuxième contact de relais est activé, le point commun P0 aux deux enroulements est relié au conducteur de phase S2.

Les deux autres extrémités P1 et P2 de chaque enroulement sont reliées aux bornes d'un condensateur permanent CM, permettant un déphasage approprié des courants parcourant chaque enroulement Un contact relais inverseur rl3 permet une connexion d'un fil interne N1 soit à l'extrémité P1 du premier enroulement, soit à l'extrémité P2 du deuxième enroulement. Le fil interne N1 est relié au conducteur de neutre N, à travers un triac TRC.

Le circuit électronique de commande MCU comprend divers moyens assurant la commande de l'équipement, c'est-à-dire des moyens de réception et d'interprétation des ordres reçus, des moyens de commande d'alimentation de l'actionneur, et de coupure de cette alimentation soit par ordre soit lorsqu'une fin de course est détectée.

A cet effet, le circuit électronique de commande MCU comprend un dispositif d'alimentation PSU très basse tension, par exemple 5 V. Le dispositif d'alimentation comprend par exemple un transformateur dont le secondaire permet de délivrer la tension d'alimentation VCC, après passage dans un redresseur et un élément de filtrage non représentés. Tout type simple de convertisseur alternatif-continu abaisseur convient pour réaliser le dispositif d'alimentation PSU.

Le circuit électronique de commande MCU comprend une unité logique de traitement CPU tel qu'un microcontrôleur. Cette unité logique de traitement est alimentée par la tension d'alimentation VCC et comprend une première entrée l1 reliée au conducteur de phase S1 par un premier montage abaisseur de tension RP1 et une deuxième entrée l2 reliée au conducteur de phase S2 par un deuxième montage abaisseur de tension RP2. Ces montages abaisseurs de tension sont symbolisés par une résistance mais peuvent comprendre un pont diviseur et divers éléments de protection et/ou de redressement.

Quand l'unité de commande RCU émet des signaux sur les conducteurs de phase S1 et S2, des moyens de détection DM de l'unité logique de traitement permettent de déterminer ces signaux.

L'unité logique de traitement CPU comprend une première sortie O1 alimentant une première bobine de relais RL1 et une deuxième sortie 02 alimentant une deuxième bobine de relais RL2, ces bobines agissant respectivement sur le premier contact de relais rl1 et sur le deuxième contact de relais r12.

L'unité logique de traitement comprend une troisième sortie 03 alimentant une troisième bobine de relais RL3. Cette bobine de relais agit sur la position du contact relais inverseur rl3. Selon que la bobine de relais RL3 est ou non alimentée, le moteur M tourne dans l'un ou l'autre sens. Cette disposition des contacts relais permet à l'unité logique de traitement CPU de provoquer l'arrêt du moteur même en présence d'un ordre de mouvement donné par l'unité de commande RCU. Elle permet également d'inverser si besoin la relation entre chaque position de l'interrupteur inverseur et chaque phase moteur. D'autres dispositions connues de l'art antérieur permettent de réaliser cette fonction.

L'unité logique de traitement comprend enfin une quatrième sortie O4 raccordée à l'entrée de pilotage GCI d'un circuit de pilotage de triac SCU, dont la sortie de pilotage GCO est raccordée à la gâchette du triac TRC.

Le triac peut être utilisé pour réduire la puissance du moteur lors de l'exécution de certaines commandes de déplacement de l'élément mobile. Il peut aussi servir avantageusement à couper l'alimentation du moteur lors de la réception d'un ordre d'arrêt.

Avantageusement, la détection de signaux particuliers, différents du signal de tension d'alimentation, permet de définir plusieurs ordres de commande différents.

Dans un premier mode de réalisation d'une interface de commande à distance RCU, représenté à la figure 1, un premier interrupteur UP permet de basculer un contact entre une première borne PM1 et une deuxième borne PM2 relié au conducteur de phase S1. Ainsi, lorsque l'interrupteur UP est actionné, le conducteur de phase P de l'alimentation est relié au conducteur S1. Un signal de tension alternative complète (pleine-onde) est détecté sur le conducteur S1, alors qu'aucun signal n'est détecté sur le conducteur S2. Ceci provoque une rotation du moteur dans le premier sens et, par conséquent, un déplacement de l'élément mobile dans le sens correspondant, par exemple un déplacement vers le haut. Dans la présente description, les tensions sont implicitement référencées par rapport au conducteur de neutre. Ainsi, « un signal de tension est présent sur le conducteur S1 » doit se comprendre : « une tension est présente entre le conducteur S1 et le conducteur de neutre ».

Un deuxième interrupteur DN permet de basculer un contact d'une position de repos dans laquelle il contacte un premier point PD1 à une position de contact d'un deuxième point PD2 relié au conducteur de phase S2. Ainsi, lorsque l'interrupteur DN est actionné, le conducteur de phase P de l'alimentation est relié directement au conducteur S2 au travers de l'interrupteur DN. L'unité de pilotage voit donc un signal de tension alternative complète sur le conducteur S2, et aucun signal sur le conducteur S1. Ceci provoque une rotation du moteur dans le deuxième sens et, par conséquent, un déplacement de l'élément mobile dans le sens correspondant, par exemple un déplacement vers le bas.

Un troisième interrupteur PI permet une commande de déplacement de l'élément mobile vers une position intermédiaire prédéfinie. Un ordre de commande particulier par exemple de déplacement vers une position intermédiaire prédéfinie, s'ajoutant aux fonctionnalités de base de déplacement de montée, de descente et d'arrêt est obtenu par une combinaison de signaux différents reçus simultanément sur les deux conducteurs S1 et S2. Un seuil de ces signaux a une caractéristique sinusoïdale complète, provenant directement de la tension sinusoïdale d'alimentation. L'autre signal a une caractéristique tronquée par rapport à la sinusoïde et ne permet pas, à lui seul d'alimenter le moteur pour provoquer le mouvement de l'élément mobile.

Ainsi, le câblage de l'interface de commande à distance présenté à la figure 1 diffère de celui d'une interface de commande classique à 3 boutons par les points suivants :
- Le point PM1 de l'interrupteur UP est également relié, par l'intermédiaire d'une liaison à diode D1, au deuxième point PD2 de l'interrupteur DN. Ainsi, lorsque l'ensemble des interrupteurs est au repos, le conducteur P de phase d'alimentation est connecté, au travers de la diode D1, au conducteur S2. L'unité de pilotage MCU voit donc en permanence un signal redressé mono-alternance avec alternances positives (ou négatives selon le sens de montage de la diode) lorsque les interrupteurs sont au repos. Ce signal se superpose de manière transparente au signal de tension alternative provenant directement du conducteur de phase P lorsque l'interrupteur DN est activé.
- Le premier point PD1 de l'interrupteur DN est relié à l'entrée du troisième interrupteur PI. Cet interrupteur PI est ouvert au repos, et peut être basculé vers un point de liaison PL1 au conducteur S1. L'interrupteur PI permet d'amener l'élément mobile dans une position intermédiaire prédéterminée. Ainsi, lorsque l'interrupteur PI est activé, le conducteur de phase d'alimentation est connecté, au travers de l'interrupteur DN au repos, au conducteur S1. L'unité de pilotage MCU voit alors sur le conducteur S1, un signal de tension alternative et sur le conducteur S2. un signal redressé mono-alternance avec alternances positives (ou négatives). L'unité de pilotage détermine alors la commande à faire exécuter par le moteur (rotation dans le premier sens ou rotation dans le deuxième sens) pour atteindre la position intermédiaire prédéterminée. Le signal de tension alternative transmis au conducteur S2 permet une alimentation du moteur sous tension nominale dès le début de l'ordre de commande.

Le montage à diode permet donc les combinaisons de signaux suivantes :

| Signal sur S1 | Signal sur S2 | Commande de base | Commande particulière |
|---|---|---|---|
| Aucun | Alternances positives | ARRET | |
| Pleine-onde | Aucun | ROTATION SENS 1 | |
| Aucun | Pleine-onde | ROTATION SENS 2 | |
| Pleine-onde | Alternances positives | | PI |

Dans un deuxième mode de réalisation d'une interface de commande à distance RCU, représenté à la figure 2, les fonctions de montée et de descente de l'élément mobile sont classiquement exécutées lorsque des appuis sur les touches commandant les interrupteurs UP ou DN interviennent. A ce moment, un signal de tension sinusoïdale est présent sur l'un des conducteurs S1 ou S2.

Un troisième interrupteur PI est connecté directement sur le conducteur de phase de l'alimentation en entrée. En sortie, il est connecté en parallèle par une liaison à diode sur un point d'entrée et de repos de l'interrupteur UP et directement sur un point d'entrée et de repos de l'interrupteur DN. Ainsi, lors d'un appui sur la touche actionnant l'interrupteur PI, celui-ci se ferme et conduit la tension d'alimentation vers les deux conducteurs S1 et S2. L'unité de pilotage MCU détecte alors un signal redressé à alternances positives (ou négatives) sur le conducteur S1 et simultanément un signal de tension alternative sur le conducteur S2. Cette combinaison de signaux informe l'unité de pilotage qu'un ordre de mise en position intermédiaire de l'élément mobile a été donné. Le signal de tension alternative transmis au conducteur S2 permet une alimentation du moteur sous tension nominale dès le début de l'ordre de commande.

Le montage de la figure 2 permet les combinaisons suivantes :

| Signal sur S1 | Signal sur S2 | Commande de base | Commande particulière |
|---|---|---|---|
| Aucun | Aucun | ARRET | |
| Pleine-onde | Aucun | ROTATION SENS 1 | |
| Aucun | Pleine-onde | ROTATION SENS 2 | |
| Alternance positive | Pleine-onde | | PI |

On peut évidemment prévoir un autre interrupteur, câblé de manière équivalente à l'interrupteur PI et permettant d'émettre un signal redressé mono-alternance sur le conducteur S2 et un signal de tension alternative sur le conducteur S1.

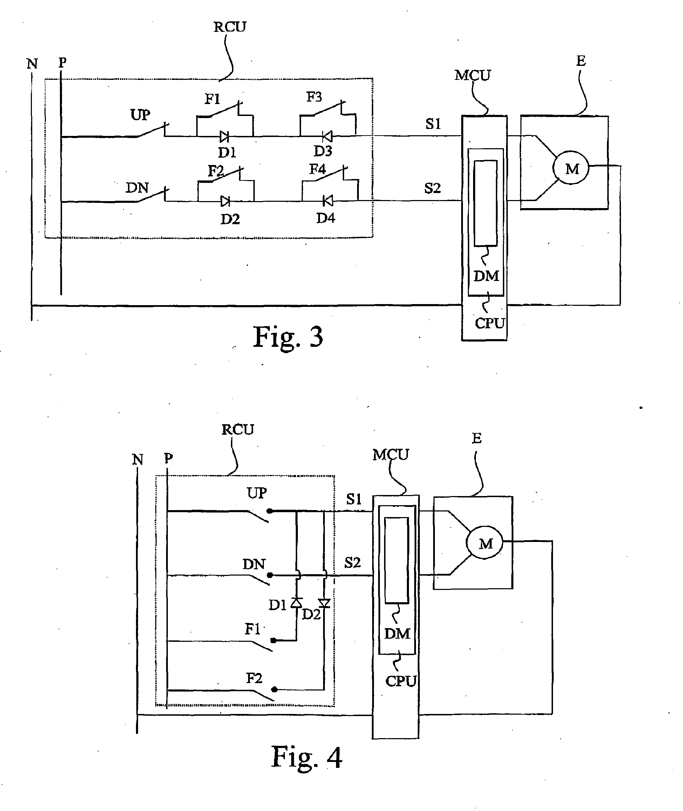

Dans un troisième mode de réalisation d'une interface de commande à distance RCU, représenté à la figure 3, les fonctions de montée et de descente de l'élément mobile sont classiquement exécutées lorsque des appuis sur les touches commandant les interrupteurs UP ou DN interviennent. Ces interrupteurs UP et DN sont du type normalement fermé et relient respectivement les conducteurs S1 et S2 au conducteur de phase d'alimentation P. Dans l'interface de commande à distance, des montages parallèles constitués d'un interrupteur normalement fermé et d'une diode sont placés en série avec les interrupteurs UP et DN. Deux montages parallèles sont placés en série avec l'interrupteur UP. Un premier montage parallèle comprend un interrupteur F1 normalement fermé monté en parallèle avec une diode D1 laissant passer les alternances positives de la tension alternative d'alimentation. Un deuxième montage parallèle comprend un interrupteur F3 normalement fermé monté en parallèle avec une diode D3 laissant passer les alternances négatives de la tension alternative d'alimentation. Deux montages parallèles sont placés en série avec l'interrupteur DN. Un premier montage parallèle comprend un interrupteur F2 normalement fermé monté en parallèle avec une diode D2 laissant passer les alternances positives de la tension alternative d'alimentation. Un deuxième montage parallèle comprend un interrupteur F4 normalement fermé monté en parallèle avec une diode D4 laissant passer les alternances négatives de la tension alternative d'alimentation. Les interrupteurs F1 à F4 permettent de commander différentes fonctions de l'équipement.

Lors d'un appui sur la touche associée à l'interrupteur UP, l'unité de pilotage MCU détecte sur le conducteur S2 un signal de tension alternative, et une disparition du signal sur le conducteur S1. L'unité de pilotage MCU commande alors une rotation du moteur dans le premier sens. C'est donc la disparition du signal sur l'un des conducteurs qui informe l'unité de pilotage sur l'action à commander. Inversement, lors d'un appui sur la touche associée à l'interrupteur DN, l'unité de pilotage détecte sur le conducteur S1 un signal de tension alternative, et une disparition du signal sur le conducteur S2. L'unité de pilotage MCU commande alors une rotation du moteur dans le premier sens. Pour alimenter le moteur, l'énergie de la phase présente sur l'un des deux conducteurs est utilisée.

Lorsque l'une des touches de fonction associée à l'un des interrupteurs F1 à F4 est actionnée, la diode disposée en parallèle avec cet interrupteur provoque la modification du signal alternatif d'alimentation en un signal de tension redressée mono alternance à alternances positives ou négatives. L'unité de pilotage MCU détecte alors une tension alternative sur l'un des conducteurs et un signal de tension redressée mono alternance sur l'autre conducteur. L'unité de pilotage MCU en déduit les actions à commander.

Le tableau ci-dessous résume les différentes combinaisons :

| Signal sur S1 | Signal sur S2 | Commande de base | Commande particulière |
|---|---|---|---|
| Pleine-onde | Pleine-onde | ARRET | |
| Pleine-onde | Aucun | ROTATION SENS 2 | |
| Aucun | Pleine-onde | ROTATION SENS 1 | |
| Alternance positive | Pleine-onde | | FONCTION F1 |
| Alternance négative | Pleine-onde | | FONCTION F3 |
| Pleine-onde | Alternance positive | | FONCTION F2 |
| Pleine-onde | Alternance négative | | FONCTION F4 |

Dans le cadre de l'invention, il a été imaginé d'utiliser les interfaces de commande décrites précédemment et de les combiner à une unité de pilotage permettant de détecter des séquences d'appuis et de commander des actions en conséquence. Ainsi, plusieurs appuis temporellement décalés peuvent constituer un ordre de commande.

Un quatrième mode de réalisation de l'installation, fonctionnant selon ce principe, est représentée à la figure 4. L'interface RCU de commande à distance comprend deux interrupteurs UP et DN permettant d'appliquer la tension sinusoïdale d'alimentation sur les conducteurs S1 et S2. Deux interrupteurs F1 et F2 sont chacun connecté en série avec des diodes D1 et D2. L'interrupteur F1 est connecté au conducteur de phase P d'alimentation et permet lorsqu'il est fermé de conduire les alternances positives de la tension d'alimentation sur le conducteur S1. L'interrupteur F2 est connecté au conducteur de phase P d'alimentation et permet lorsqu'il est fermé de conduire les alternances négatives de la tension d'alimentation sur le conducteur S1.

La fermeture de ces interrupteurs F1 et F2 ne provoque de mouvement immédiat du moteur que si elle est accompagnée d'une fermeture de l'un des interrupteurs UP et DN de manière à ce qu'un signal de tension alternative soit appliqué sur l'un des conducteur S1 et S2 et qu'un signal de tension redressé mono-alterance soit appliqué sur l'autre conducteur. Alternativement, pour provoquer une action particulière de l'équipement, un mouvement n'est exécuté que lors d'une fermeture de l'un des interrupteurs UP et DN, cette fermeture ayant lieu après une manoeuvre de l'un des interrupteurs F1 et F2.

Pour réveiller l'unité de pilotage MCU lors d'une manoeuvre de l'un des interrupteurs F1 et F2, on utilise un signal de tension proche de celui de la tension alternative d'alimentation grâce à des solutions techniques simples et à faible coût. Les interrupteurs F1 et F2 sont ainsi connectés en série avec des diodes pour ne laisser que les alternances de même polarité en direction des conducteurs S1 et S2. Au moment où l'unité de pilotage reçoit les signaux issus des interrupteurs F1 ou F2, elle mémorise un état et exécute une action, en fonction de l'état mémorisé, dès qu'elle détecte sur l'un des conducteurs un signal de tension sinusoïdale d'alimentation.

Les combinaisons détectables par l'électronique, pour un schéma correspondant à celui de la figure 4, peuvent être résumées dans le tableau suivant.

| Signal sur S1 | Signal sur S2 | Commande de base | Commande particulière |
|---|---|---|---|
| Aucun | Aucun | ARRET | |
| Pleine-onde | Aucun | ROTATION SENS 1 | |
| Aucun | Pleine-onde | ROTATION SENS 2 | |
| Alternance positive | Aucun | | MEMORISATION 1 |
| Alternance positive | Pleine-onde | | FONCTION 1 |
| Alternance négative | Aucun | | MEMORISATION 2 |
| Alternance négative | Pleine-onde | | FONCTION 2 |

Il est possible de câbler de la même façon deux autres interrupteurs F3 et F4 avec des diodes D3 et D4, raccordées cette fois au deuxième conducteur de phase S2, pour réaliser deux fonctions supplémentaires. La présence d'un signal redressé à alternances positives ou à alternances négatives sur l'un des conducteurs S1 et S2, sans signal sur l'autre conducteur peut permettre la mise en mémoire d'un indicateur. Dès qu'un signal de tension alternative d'alimentation est détecté sur l'un des conducteurs S1 et S2, une action correspondante à l'indicateur est exécutée.

La mise en mémoire peut être réalisée par le basculement d'un indicateur de l'unité de pilotage. Ce basculement peut être maintenu tant qu'une nouvelle commande n'a pas été exécutée ou préférentiellement n'être mémorisé que pendant un intervalle de temps relativement court (de l'ordre de 5-10 secondes par exemple).

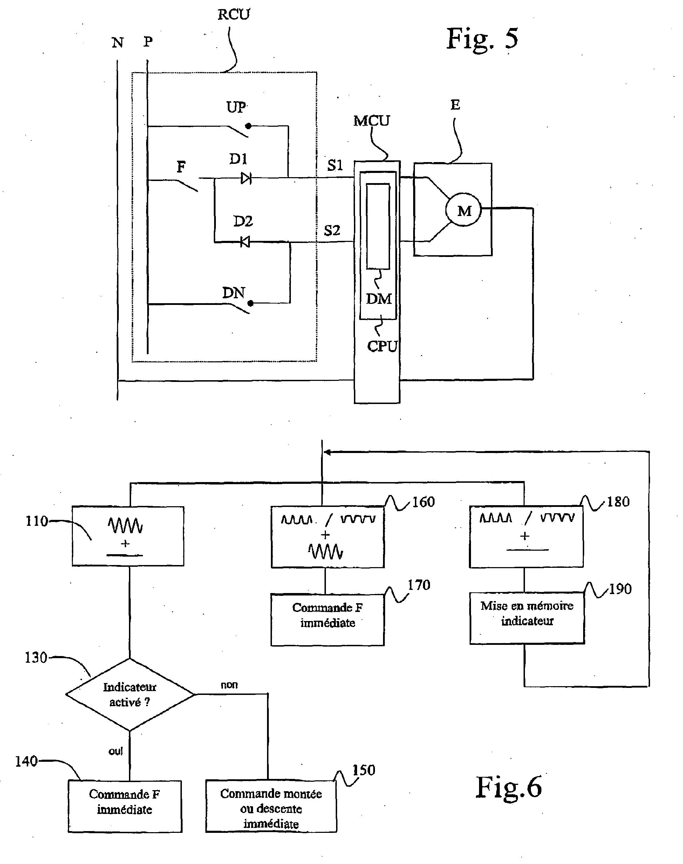

La figure 5 représente un cinquième mode de réalisation d'une installation selon l'invention. L'unité de commande à distance RCU comprend deux interrupteurs de commande de mouvement UP et DN et un interrupteur de commande d'un mouvement particulier F.

Le premier interrupteur UP est raccordé entre la phase de la source d'alimentation et le premier conducteur de phase S1. Le deuxième interrupteur DN est raccordé entre la phase de la source d'alimentation et de deuxième conducteur de phase S2. L'interrupteur de commande d'un mouvement particulier F est raccordé à la phase de la source d'alimentation, d'une part ; et au point commun de deux diodes D1 et D2, la cathode de la diode D1 étant raccordée au premier conducteur de phase S1 et l'anode de D2 étant raccordée au deuxième conducteur de phase S2.

Quand l'interrupteur UP est actionné, l'unité de pilotage reçoit donc un signal de tension pleine-onde sur le conducteur de phase S1 et les seules alternances négatives sur le conducteur de phase S2. Cette situation est interprétée comme un ordre de mouvement de montée, exécutable immédiatement.

Quand l'interrupteur DN est actionné, l'unité de pilotage MCU reçoit donc un signal de tension pleine-onde sur le conducteur de phase S2 et les seules alternances positives sur le conducteur de phase S1. Cette situation est interprétée comme un ordre de mouvement de descente, exécutable immédiatement.

Quand l'interrupteur F est actionné, l'unité de pilotage reçoit donc les seules alternances positives sur le conducteur de phase S1 et les seules alternances négatives sur le conducteur de phase S2. Cette situation est interprétée comme un ordre de mouvement particulier.

Dans une première variante, cet ordre est simplement enregistré pour être exécuté lors de la réapparition d'un signal pleine-onde sur l'un des deux conducteurs de phase.

Dans une deuxième variante, cet ordre est exécutable immédiatement. En effet, l'unité de pilotage MCU dispose d'une tension pleine-onde en combinant les tensions reçues sur chacun des conducteurs de phase S1 et S2, ce qui permet d'alimenter l'actionneur sous sa tension nominale.

Un mode d'exécution du procédé de commande selon l'invention est traduit par l'ordinogramme de la figure 6.

Cet organigramme est décrit en référence au quatrième mode de réalisation de l'installation.

Dans une première étape 110, on applique un signal de tension alternative d'alimentation sur l'un des conducteurs S1 et S2 et aucun signal sur l'autre conducteur. Ceci réveille l'unité de pilotage.

Dans une étape suivante130, on teste si un indicateur est activé.

Si tel est le cas, on passe à une étape 140 dans laquelle une commande F associée à l'indicateur est immédiatement exécutée.

Si tel n'est pas le cas (par exemple parce qu'aucun interrupteur de fonction n'a été activé depuis la dernière commande ou parce que le temps de mémorisation est dépassé), on passe à une étape 150 dans laquelle une commande de déplacement de l'élément mobile est immédiatement exécutée. L'élément mobile est déplacé dans un premier sens si le signal de tension alternative d'alimentation est appliqué sur le conducteur S1 et dans le deuxième sens si le signal de tension alternative d'alimentation est appliqué sur le conducteur S2.

Dans une étape 160, on applique un signal de tension alternative d'alimentation sur l'un des conducteurs S1 et S2 et un signal particulier, par exemple un signal redressé mono-alternance sur l'autre conducteur. Ceci réveille l'unité de pilotage.

Dans une étape suivante 170, une commande F associée au signal particulier appliqué sur l'un des conducteurs S1 et S2 est immédiatement exécutée.

Dans une étape 180, on applique un signal de tension particulier, par exemple un signal de tension redressée mono-alternance d'alimentation sur l'un des conducteurs S1 et S2 et aucun signal sur l'autre conducteur, Ceci réveille l'unité de pilotage.

Dans une étape suivante 190, on met en mémoire un indicateur correspondant au signal particulier détecté à l'étape précédente et on boucle sur l'une des étapes 110, 160 ou 180.

Dans le cas des trois premiers modes de réalisation de l'installation, seules les étapes 160 et 170 du procédé sont conservées dans le cas le plus simple. Il est possible, en variante, d'utiliser l'ensemble du procédé également dans ces modes de réalisation.

Dans le cas du cinquième mode de réalisation de l'installation, l'ensemble du procédé est utilisé dans la première variante, alors que seules les étapes 160 et 170 sont utilisées dans la deuxième variante. L'étape 160 est modifiée : elle consiste alors à appliquer un signal simple alternance d'une première polarité sur le premier conducteur de phase et un signal simple alternance d'une deuxième polarité sur le deuxième conducteur de phase.

L'utilisation d'une interface de commande comprenant une pluralité de touches de fonction tels que décrits peut permettre non seulement d'obtenir des ordres de commande supplémentaires, mais également des ordres de programmation, tout en conservant une structure d'actionneur à trois conducteurs, dont deux conducteurs affectés à la commande.

Il est à noter que d'autres interrupteurs peuvent être ajoutés à l'interface de commande à distance de la figure 3. Ces interrupteurs supplémentaires sont destinés à transmettre aux conducteurs S1 et S2 des signaux de tensions différents de ceux que transmet l'interface de commande à distance représentée lorsque l'un des interrupteurs F1 à F4 est ouvert. Ces interrupteurs supplémentaires sont par exemple du type normalement fermé et montés en parallèle avec des diodes Zener présentant par exemple une tension Zener de l'ordre de 50 à 100 Volts. Ils peuvent aussi être montés chacun en parallèle avec un pont diviseur de tension pour fournir sur les conducteurs S1 et S2 une tension alternative d'amplitude réduite.

De même, d'autres interrupteurs peuvent être ajoutés à l'interface de commande à distance de la figure 4. Ces interrupteurs supplémentaires sont destinés à transmettre aux conducteurs S1 et S2 des signaux de tensions différents de ceux que transmet l'interface de commande à distance représentée lorsque l'un des interrupteurs F1 et F2 est fermé. Ces interrupteurs supplémentaires sont par exemple montés en série avec des diodes orientées dans d'autres sens que ceux représentés ou montés en série avec des diodes Zener présentant par exemple une tension Zener de l'ordre de 50 à 100 Volts.

L'invention a été décrite dans le cas habituel d'une installation dans laquelle le neutre du réseau commercial sert de référence des potentiels. Hors de tout aspect normatif, il est cependant possible d'inverser l'ensemble des notations neutre/phase et d'utiliser deux conducteurs de neutre différents pour transmettre les ordres de mouvement, et un seul conducteur de phase.

## Revendications

1. Procédé de commande d'un équipement domotique (E) muni d'un moteur électrique (M) pour manoeuvrer un élément mobile (LD), à l'aide d'une interface (RCU) de commande à distance raccordée à la phase d'une source de tension alternative d'alimentation et raccordée par un premier conducteur de phase (S1) et un deuxième conducteur de phase (S2) à une unité (MCU) de pilotage de l'équipement domotique (E), l'unité de pilotage étant également raccordée au neutre (N) de la source de tension alternative d'alimentation, des ordres de commande de mouvement étant déterminés dans l'unité de pilotage en fonction de la présence de la tension alternative d'alimentation sur les conducteurs de phase (S1, S2), **caractérisé en ce qu'**un ordre de commande de mouvement particulier, est déterminé par la présence d'un signal de tension particulier sur l'un au moins des conducteurs de phase, ledit signal de tension particulier présentant une caractéristique tronquée par rapport à la tension sinusoïdale d'alimentation, et **en ce que** cet ordre de commande particulier n'est exécuté par l'unité (MCU) de pilotage que si la tension alternative d'alimentation est disponible dans celle-ci à partir des tensions présentes sur les conducteurs de phase (S1, S2).

2. Procédé de commande selon la revendication 1, **caractérisé en ce que** le signal de tension particulier est de type :
- redressé mono-alternance avec alternances positives,
- redressé mono-alternance avec alternances négatives.

3. Procédé de commande selon l'une des revendications 1 à 2 **caractérisé en ce que** l'unité (MCU) de pilotage provoque un mouvement particulier de l'élément mobile (LD) de l'équipement sur l'un des conducteurs de phase et qu'un signal de tension particulier est détecté sur l'autre conducteur de phase.

4. Procédé de commande selon la revendication 3, **caractérisé en ce qu'**un mouvement particulier est un déplacement jusqu'à amener l'élément mobile de l'équipement domotique dans une position intermédiaire prédéterminée.

5. Procédé de commande selon la revendication 3, **caractérisé en ce qu'**un mouvement particulier est un déplacement de l'élément mobile à vitesse réduite.

6. Procédé de commande selon l'une des revendications 1 à 2 **caractérisé en ce que** la présence de la tension alternative d'alimentation sur au moins l'un des conducteurs de phase est attendue avant de provoquer un mouvement particulier de l'élément mobile de l'équipement domotique.

7. Procédé de commande selon la revendication 6, **caractérisé en ce qu'**une information est mise en mémoire lorsqu'un signal de tension particulier est détecté sur l'un des conducteurs de phase alors que la tension alternative d'alimentation n'est pas détectée sur l'autre conducteur de phase.

8. Interface de commande à distance, **caractérisée en ce qu'**elle est destinée à être raccordée à la phase (P) d'une source de tension alternative d'alimentation et à être raccordée par un premier conducteur de phase (S1) et un deuxième conducteur de phase (S2) à une unité (MCU) de pilotage d'un équipement domotique (E) et **en ce qu'**elle comprend des moyens matériels (UP, DN, PI, D1 ; UP, DN, F1, F2, F3, F4, D1, D2, D3, D4) comprenant, entre la phase et un conducteur de phase, un interrupteur associé à des moyens tronquant la tension sinusoïdale de sorte à mettre en oeuvre le procédé selon l'une des revendications 1 à 7.

9. Interface de commande à distance selon la revendication 8, **caractérisée en ce que** les moyens matériels comprennent des diodes (D1, D2, D3, D4) associées à des interrupteurs (UP, DN, F1, F2, F3, F4).

10. Installation domotique **caractérisée en ce qu'**elle comprend une interface de commande à distance selon la revendication 8 ou 9, un équipement domotique (E) muni d'un moteur électrique (M) pour manoeuvrer un élément mobile (LD) et une unité (MCU) de pilotage de l'équipement domotique, l'interface de commande à distance et l'unité (MCU) de pilotage étant reliées par deux conducteurs de phase (S1, S2) et un conducteur de neutre (N), par l'intermédiaire desquels des ordres de commande de mouvement de l'élément mobile et des ordres de commande de mouvement particuliers sont susceptibles d'être transmis, les ordres de commande de mouvement étant détectés par la présence d'un signal de tension alternative d'alimentation sur l'un ou l'autre des conducteurs de phase (S1, S2) permettant d'alimenter l'équipement domotique en énergie électrique et **en ce que** l'unité de pilotage (MCU) comprend des moyens (DM) pour déterminer les signaux de tension présents sur les conducteurs de phase (S1, S2).

## Claims

1. Method for controlling a home automation equipment (E) provided with an electric motor (M) for driving a mobile element (LD) with the aid of a remote control interface (RCU) connected to the phase of an alternating voltage power source and connected via a first phase conductor (S1) and a second phase conductor (S2) to a control unit (MCU) of the home automation equipment (E), the control unit being also connected to the neutral terminal (N) of the alternating voltage power source, the control commands for movements being determined in the control unit in response to the presence of the alternating power voltage on the phase conductors (S1, S2), **characterised in that** a particular control command for a movement is determined by the presence of a signal of a particular voltage on at least one of the phase conductors, said particular voltage signal having a truncated characteristic with respect to the sinusoidal supply voltage, and **in that** this particular control command is only executed by the control unit (MCU) if the alternating supply voltage is available in this unit from the voltages on the phase conductors (S1, S2).

2. Control method according to claim 1, **characterised in that** the particular voltage signal is of the following nature:
- rectified half wave with positive half waves,
- rectified half wave with negative half waves.

3. Control method according to one of claims 1 and 2, **characterised in that** the control unit (MCU) causes a particular movement of the mobile element (LD) of the home automation equipment when the alternating supply voltage is detected on one of the phase conductors, and when a particular voltage signal is detected on the other phase conductor.

4. Control method according to claim 3, **characterised in that** a particular movement is a displacement until bringing the mobile element of the home automation equipment to a predetermined intermediate position.

5. Control method according to claim 3, **characterised in that** a particular movement is a displacement of the mobile element with reduced speed.

6. Control method according to one of claims 1 and 2, **characterised in that** the presence of the alternating supply voltage on at least one of the phase conductors is waited for before causing a particular movement of the mobile element of the home automation equipment.

7. Control method according to claim 6, **characterised in that** an information is recorded when a particular voltage signal is detected on one of the phase conductors and the alternating supply voltage is not detected on the other phase conductor.

8. Remote control interface, **characterised in that** it is intended for being connected to the phase (P) of an alternating supply voltage, and for being connected through a first phase conductor (S1) and a second phase conductor (S2) to a control unit (MCU) of a home automation equipment (E), and **in that** it comprises hardware means (UP, DN, PI, D1; UP, DN, F1, F2, F3, F4, D1, D2, D3, D4) including, between the phase and a phase conductor, a switch associated to means for truncating the sinusoidal supply voltage, such as to implement the method according to one of claims 1 to 7.

9. Remote control interface according to claim 8, **characterised in that** the hardware means include diodes (D1, D2, D3, D4) associated to switches s (UP, DN, F1, F2, F3, F4).

10. Home automation installation, **characterised in that** it comprises a remote control interface according to claim 8 or 9, a home automation equipment (E) including an electric motor (M) for driving a mobile element (LD), and a control unit (MCU) of the home automation equipment, the remote control interface and the control unit (MCU) being connected through two phase conductors (S1, S2) and a neutral conductor (N), the control commands for the movement of the mobile element and the control commands for particular movements being transmittable on these conductors, the control commands for movements being detected by the presence of an alternating supply voltage signal on one or the other phase conductor (S1, S2) thus allowing to supply the home automation equipment with electric energy, and **in that** the control unit (MCU) comprises means (DM) for the determination of voltage signals that are present on the phase conductors (S1, S2).

## Patentansprüche

1. Verfahren zum Steuern einer haustechnischen Vorrichtung (E), die einen Elektromotor (M) zum Antrieb eines beweglichen Elements (LD) aufweist, mit Hilfe einer Fernbedienungs-Schnittstelle (RCU), die an einer Phase einer Wechselspannungsquelle zur Stromversorgung und über einen ersten Phasenleiter (S1) sowie einen zweiten Phasenleiter (S2) an ein Steuergerät (MCU) der haustechnischen Vorrichtung (E) angeschlossen ist, wobei das Steuergerät ausserdem mit dem Nullleiter (N) der Wechselstrom-Spannungsquelle zur Stromversorgung verbunden ist und Steuerbefehle für den Antrieb im Steuergerät in Abhängigkeit vom Vorhandensein der Wechselspannung zur Stromversorgung auf den Phasenleitern (S1, S2) bestimmt werden, **dadurch gekennzeichnet, dass** ein besonderer Steuerbefehl für einen Bewegungsantrieb vom Vorhandensein eines besonderen Spannungssignals auf mindestens einem Phasenleiter bestimmt wird, wobei das besondere Spannungssignal eine verstümmelte Eigenschaft gegenüber der sinusförmigen Speisespannung aufweist, und **dadurch**, dass dieser besondere Steuerbefehl nur dann vom Steuergerät (MCU) ausgeführt wird, wenn die Wechselspannung zur Stromversorgung auf Grund von Spannungen auf den Phasenleitern (S1, S2) im Steuergerät verfügbar ist.

2. Verfahren zum Steuern nach Anspruch 1, **dadurch gekennzeichnet, dass** das besondere Spannungssignal von folgender Art ist:
- Halbweg-Gleichrichtung mit positiven Halbperioden,
- Halbweg-Gleichrichtung mit negativen Halbperioden.

3. Verfahren zum Steuern nach einem der Ansprüche 1 und 2, **dadurch gekennzeichnet, dass** das Steuergerät (MCU) eine besondere Bewegung des beweglichen Elements (LD) der haustechnischen Vorrichtung hervorruft, wenn die Wechselspannung der Stromversorgung auf einem der Phasenleiter ermittelt wird, und wenn ein besonderes Spannungssignal auf dem anderen Phasenleiter vorgefunden wird.

4. Verfahren zum Steuern nach Anspruch 3, **dadurch gekennzeichnet, dass** eine besondere Bewegung eine Verschiebung des beweglichen Elements der haustechnischen Vorrichtung in eine vorgegebene Zwischenstellung ist.

5. Verfahren zum Steuern nach Anspruch 3, **dadurch gekennzeichnet, dass** eine besondere Bewegung eine Verschiebung des beweglichen Elements mit verminderter Geschwindigkeit ist.

6. Verfahren zum Steuern nach einem der Ansprüche 1 und 2, **dadurch gekennzeichnet, dass** das Erscheinen der Wechselspannung der Stromversorgung auf mindestens einem Phasenleiter abgewartet wird, bevor eine besondere Bewegung des beweglichen Elements der haustechnischen Vorrichtung hervorgerufen wird.

7. Verfahren zum Steuern nach Anspruch 6, **dadurch gekennzeichnet, dass** eine Information gespeichert wird, wenn ein besonderes Spannungssignal auf einem der Phasenleiter ermittelt wird, die Wechselspannung der Stromversorgung auf dem anderen Phasenleiter jedoch nicht erscheint.

8. Fernbedienungs-Befehlsschnittstelle, **dadurch gekennzeichnet, dass** sie zur Verbindung mit der Phase (P) einer Wechselspannungsquelle zur Stromversorgung und zur Verbindung mit einem Steuergerät (MCU) der haustechnischen Vorrichtung (E) über einen ersten Phasenleiter (S1) und einen zweiten Phasenleiter (S2) bestimmt ist, und dass sie Hardwaremittel (UP, DN, PI, D1; UP, DN, F1, F2, F3, F4, D1, D2, D3, D4) aufweist, welche einen Schalter mit zugeordneten Mitteln zum Verstümmeln der Sinusspannung zur Stromversorgung zwischen der Phase und einem Phasenleiter enthält, das Ganze zur Ausführung des Verfahrens nach einem der Ansprüche 1 bis 7.

9. Fernbedienungs-Befehlsschnittstelle nach Anspruch 8, **dadurch gekennzeichnet, dass** die Hardwaremittel Dioden (D1, D2, D3, D4) aufweisen, welche Schaltern (UP, DN, F1, F2, F3, F4) zugeordnet sind.

10. Haustechnische Anlage, **dadurch gekennzeichnet, dass** sie eine Fernbedienungs-Befehlsschnittstelle nach Anspruch 8 oder 9 sowie eine haustechnische Vorrichtung (E) mit einem Elektromotor (M) zum Antrieb eines beweglichen Elements (LD) und ein Steuergerät (MCU) aufweist, wobei die Fernbedienungs-Befehlsschnittstelle sowie das Gerät (MCU) über zwei Phasenleiter (S1, S2) und einen Nullleiter (N) miteinander verbunden sind und über welche Steuerbefehle zur besonderen Bewegung übertragen werden können, und wobei die Steuerbefehle zur Bewegung durch das Vorhandensein eines Wechselspannungssignals zur Stromversorgung auf dem einen oder dem anderen Phasenleiter (S1, S2), welche die Versorgung der haustechnischen Vorrichtung mit elektrischer Energie ermöglichen, ermittelt werden, und dass das Steuergerät (MCU) Mittel (DM) zur Ermittlung der Spannungssignale aufweist, welche auf den Phasenleitern (S1, S2) vorhanden sind.
